# EUROPEAN PATENT APPLICATION

(11) **EP 4 759 103 A1**
(43) Date of publication of application: **17.06.2026**
(21) Application number: 25213583.5
(22) Date of filing: 05.11.2025
(51) Int. Cl.: A01B 21/08, G01P 3/00, A01C 5/06

(54) **AGRICULTURAL IMPLEMENTS COMPRISING INERTIAL SENSORS AND RELATED SYSTEMS AND METHODS**

(30) Priority: 11.12.2024 US 202463730707 P
(71) Applicant: Agco Corporation, Duluth, Georgia 30096 (US)
(72) Inventor: STRODA, Wade L, Hesston, 67062 (US); FIGGER, Robert, Hesston, 67062 (US)
(74) Representative: AGCO Intellectual Property Department

(57) **Abstract**

An agricultural implement includes a main frame having a support bar oriented in a direction generally transverse to a direction of travel when the implement is used to work a field; a plurality of rotating ground-engaging elements aligned along a length of the support bar, and a plurality of bearing caps. Each of the ground-engaging elements is configured to rotate about an axle, and each bearing cap is coupled to one of the ground-engaging elements. Each bearing cap includes an inertial sensor configured to measure an angular motion of the ground-engaging element and a transmitter configured to transmit the angular motion. Each bearing cap is configured to seal an interface between the ground-engaging element and corresponding axle. Related methods are also disclosed.

## Description

### FIELD

Embodiments of the present disclosure relate generally to agricultural implements, and more particularly, to implements that have disc blades or other rotating ground-engaging elements.

### BACKGROUND

Modern farms are faced with a variety of problems, including increased concern for soil erosion, crop residue management, and rising production costs with stagnant crop prices. One way farmers are addressing these concerns is to reduce, as far as possible, the number of passes which a farmer must make over the fields. In corn growing operations, after the corn is harvested, a farmer may conduct fall tillage to bury the crop residue (e.g., stocks or stubble) from the harvested crop and to break up sub-soil compaction in preparation for spring planting. Disc harrow implements have been developed to accomplish both of these tasks in a single pass.

Disc harrows contain a set of rotating blades that cut and incorporate residue into the soil. The rotation of the blades is caused by forward travel of the implement being pulled through the field by a tractor. One typical disc harrow has a pair of wings, each having multiple gangs of disc blades, mounted on the front of the implement with the wings angled inward and rearward toward each other followed by another pair of wings having disc gangs which are angled inward and forward toward each other.

The process of moving soil and residue in various soil types and various soil conditions with a disc harrow can lead to plugging problems. This plugging typically occurs when residue gets stuck between the disc scraper and the disc blade, or when residue builds up around the disc gang connection points. Once this plugged condition occurs, the operator must take action to prevent building up a large pile of dirt and residue in front of the disc harrow. The pile of residue is undesirable as it impacts planting conditions and has the potential to reduce the lift of the disc harrow.

Agricultural planters with numerous row units are used to plant seeds upon or in the ground. Planters may have a central portion pulled by a tractor, and may have wings extending from either side. The individual row units, mounted to the center section or to a wing, typically deliver seeds into separate rows. The row units may receive seed from a common central hopper. Each row unit may have ground-engaging tools to clear residue, open a seed trench, plant seeds, deliver fertilizer, close a seed trench, etc. These tools may also have plugging problems, as described above in relation to disc harrows.

### BRIEF SUMMARY

In some embodiments, an agricultural implement includes a main frame having a support bar oriented in a direction generally transverse to a direction of travel when the implement is used to work a field; a plurality of rotating ground-engaging elements aligned along a length of the support bar, and a plurality of bearing caps. Each of the ground-engaging elements is configured to rotate about an axle, and each bearing cap is coupled to one of the ground-engaging elements. Each bearing cap includes an inertial sensor (e.g., an accelerometer, a gyroscope, and/or a magnetometer, etc.) configured to measure an angular motion (e.g., an angular acceleration, an angular velocity, etc.) of the ground-engaging element and a transmitter configured to transmit the angular motion. Each bearing cap is configured to seal an interface between the ground-engaging element and corresponding axle.

Each transmitter is a wireless transmitter, and may be configured to communicate via Bluetooth or other electromagnetic communications.

The support bar comprises a toolbar, and further comprising a plurality of row units spaced along the toolbar.

In some embodiments, the support bar includes a toolbar, and the implement has a plurality of row units spaced along the toolbar. Each ground-engaging element is carried by one of the row units.

The row units may planter row units, fertilizer row units, etc., and may each be coupled to the toolbar by a parallel linkage.

The toolbar may have a first section and at least one wing section hingedly coupled to the first section.

A plugging detection system is configured to alert an operator if one or more of the ground-engaging elements of the agricultural implement have a motion different from a motion of remaining ground-engaging elements by at least a threshold amount. The plugging detection system includes a control module configured to receive the angular motion from the transmitters and compare the angular motion data of each ground-engaging element to an angular motion of the remaining ground-engaging elements.

Some embodiments include a method for operating an agricultural implement having a plurality of rotating ground-engaging elements aligned along a length of a support bar. The method includes driving the agricultural implement through an agricultural field; measuring an angular motion of each of the ground-engaging elements using a plurality of bearing caps, each bearing cap comprising an inertial sensor; wirelessly transmitting the angular motion of each of the ground-engaging elements to a control module; comparing the angular motions of each of the ground-engaging elements using the control module; and displaying an alert if one of the ground-engaging elements has an angular motion that is different than the angular motion of other of the ground-engaging elements by a preselected threshold amount.

The angular motion of each of the ground-engaging elements may be transmitted wirelessly to the control module.

In some embodiments, the method includes stopping the driving of the agricultural implement responsive to the alert and/or raising the agricultural implement responsive to the alert.

Within the scope of this disclosure it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified perspective view of an agricultural disc harrow implement;
FIG. 2 is a simplified view of a support bar and disc gangs of the implement shown in FIG. 1;
FIG. 3 is a simplified view of a portion of one of the disc gangs of the implement shown in FIG. 1;

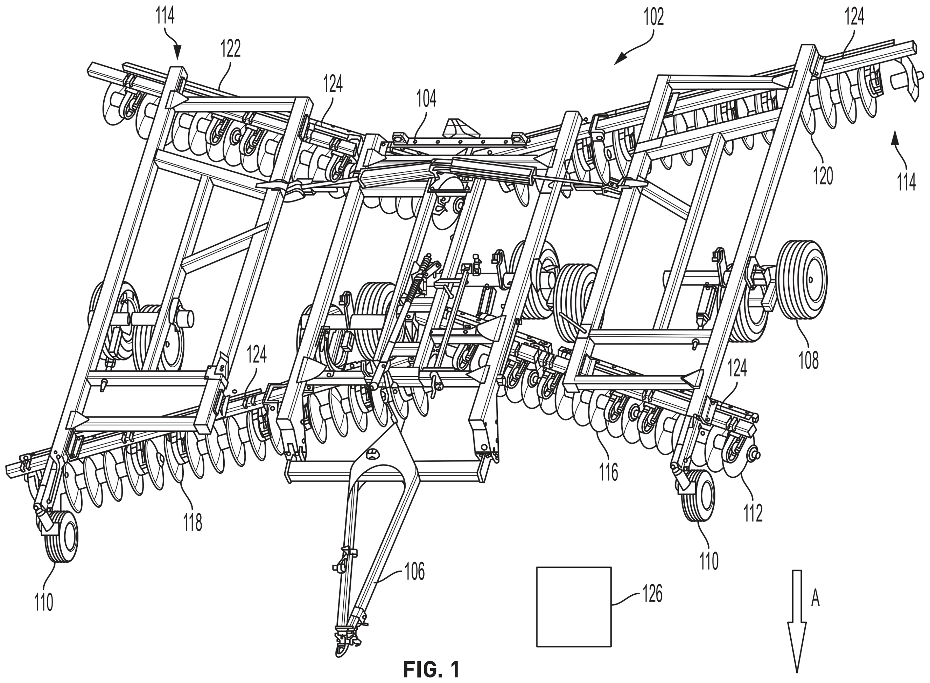

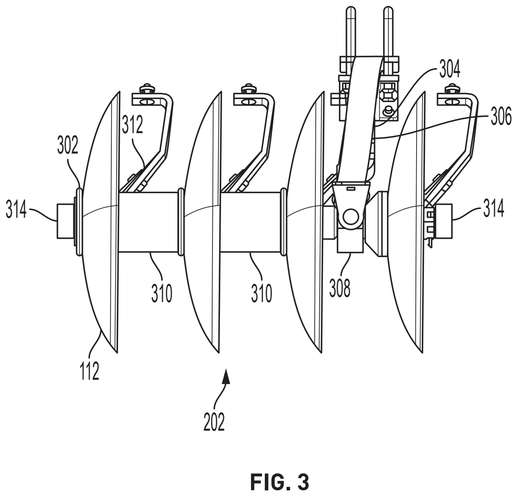

FIG. 3 is an exploded view of a portion of one of the disc gangs of the implement shown in FIG. 1;

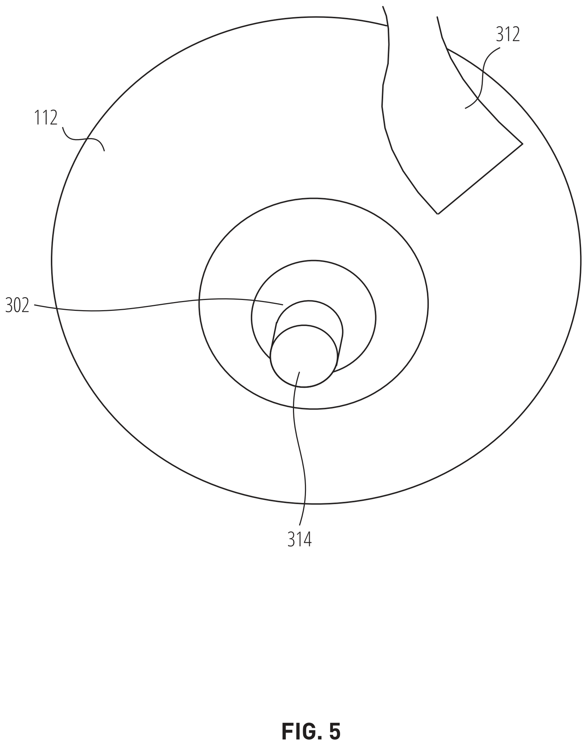

FIG. 5 is a simplified view of a disc blade with a bearing cap;

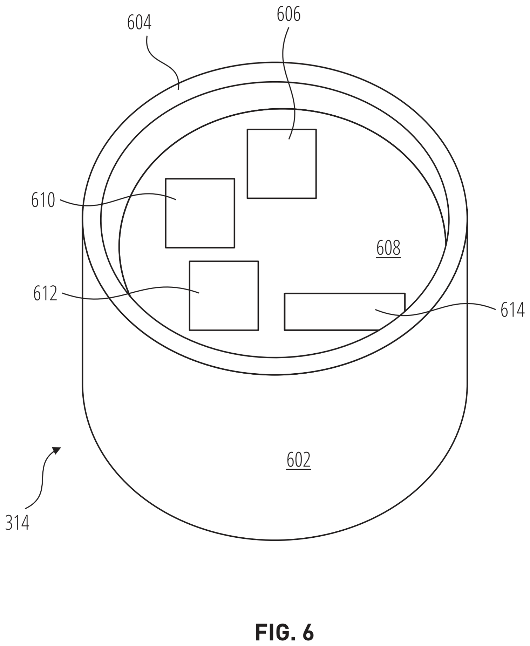

FIG. 6 illustrates the bearing cap shown in FIG. 5;

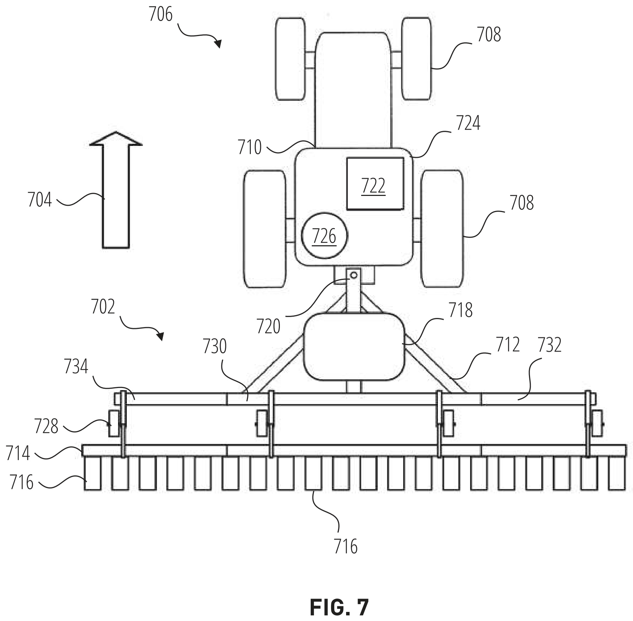

FIG. 7 is a simplified top view of a tractor pulling an implement;

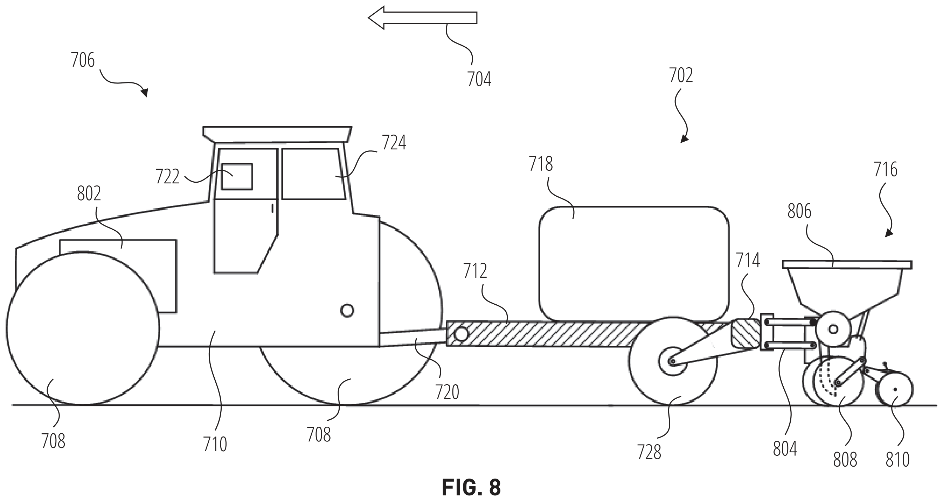

FIG. 8 is a simplified side view of the tractor and implement shown in FIG. 7;

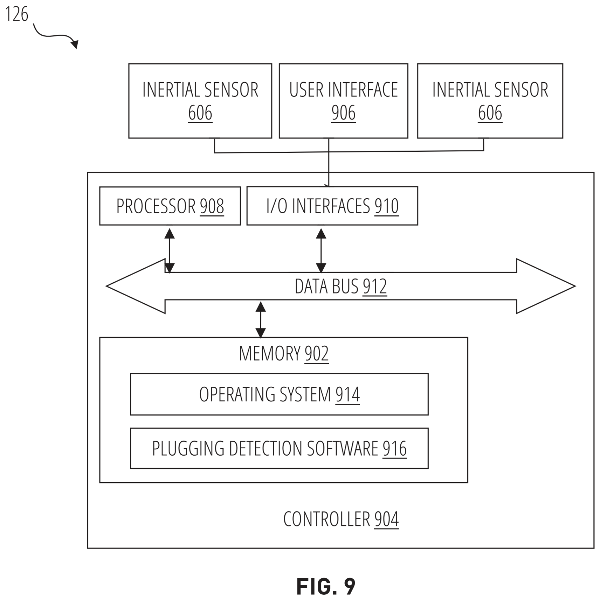

FIG. 9 illustrates a control module that may be used in conjunction with agricultural implements; and

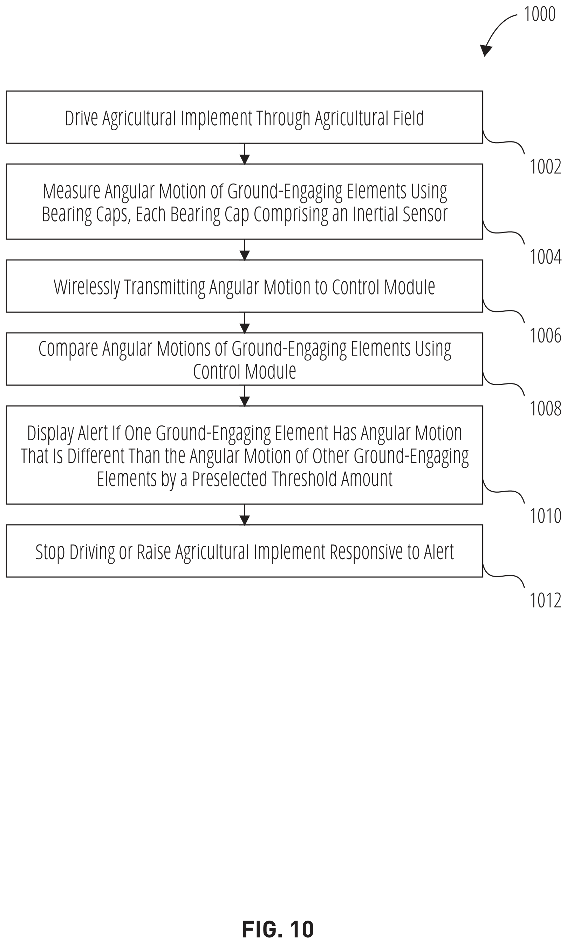

FIG. 10 is a flow chart illustrating a method for operating an agricultural implement.

### DETAILED DESCRIPTION

The illustrations presented herein are not actual views of any agricultural implement or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" to avoid any implication that other, compatible materials, structures, features, and methods usable in combination therewith should or must be excluded.

As used herein, the term "configured" refers to a size, shape, material composition, and arrangement of one or more structure and/or apparatus facilitating operation thereof in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

The terms "longitudinal" and "transverse" are made in relation to a machine's normal direction of travel. In other words, the term "longitudinal" equates to the fore-and-aft direction, whereas the term "transverse" equates to the crosswise direction, or left and right.

FIG. 1 illustrates an agricultural disc harrow implement 102, which is pulled by an agricultural vehicle, such as a tractor, in a direction A of travel when the implement 102 is used to work a field. The implement 102 includes a main frame 104 having a hitch 106 on the front end that may be used to connect the implement 102 to the agricultural vehicle. A set of center wheels 108 is attached across the main frame 104 at positions, for example, roughly midway between the front and rear ends of the main frame 104. The center wheels 108 support the implement 102 as well as provide depth adjustment. Additionally, a set of pivoting wheels 110 is connected to front distal ends of the main frame 104.

The implement 102 also includes a plurality of disc blades 112 mounted on one or more gang assemblies 114 attached to the main frame 104. In accordance with one example configuration illustrated in FIG. 1, the gang assemblies 114 are arranged with a front left wing 116, a front right wing 118, a rear left wing 120, and a rear right wing 122. However, one skilled in the art will understand that the one or more gang assemblies 114 on the implement 102 may be arranged in other suitable configurations. In the illustrated embodiment, the front left wing 116 and the front right wing 118 are positioned at respective converging angles that extend inward and rearward from outside to inside, and the rear left wing 120 and rear right wing 122 are positioned at respective converging angles that extend inward and forward from outside to inside. The front left wing 116 and the front right wing 118 are aligned with the rear left wing 120 and the rear right wing 122, respectively, such that the ground is engaged by the plurality of disc blades 112 as the implement 102 is pulled in the direction of travel ***A*** by the agricultural vehicle. Each wing 116, 118, 120, 122 includes a support bar 124 extending substantially the length of the wing. The support bar 124 is attached to the main frame 104. The support bar 124 is oriented in a direction generally transverse to the direction A of travel when the implement is used to work a field. For example, the support bar 124 may be angled from approximately 60° to 90° from a central longitudinal axis of the implement 102, such as approximately 75°. In some embodiments, the support bar 124 may be oriented perpendicular (*i.e.*, 90°) to the direction ***A*** of travel.

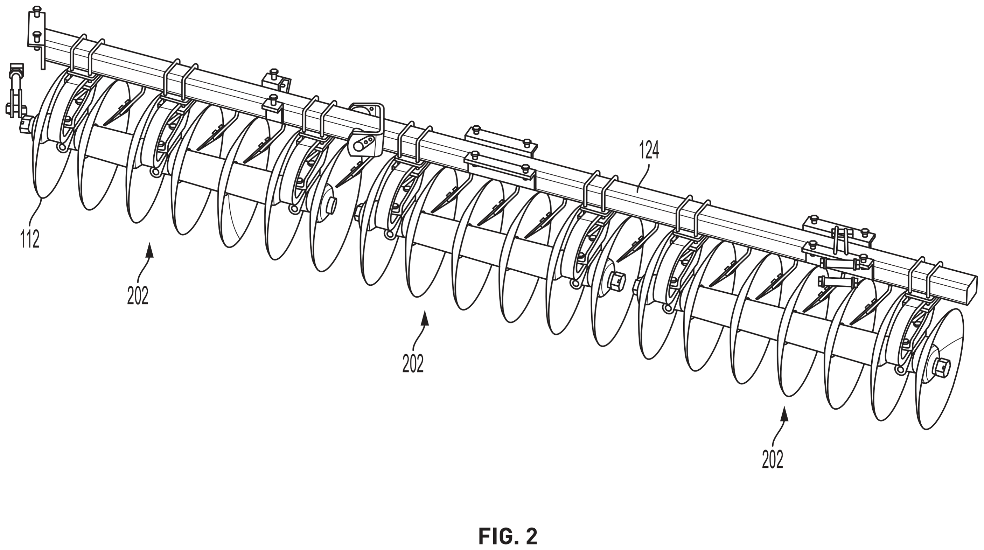

Turning also now to FIG. 2, each wing 116, 118, 120, 122 includes a plurality of disc gangs 202 aligned along the length of the support bar 124 of the wing. Each disc gang 202 has a plurality of the disc blades 112 substantially equally spaced along an axis of the disc gang 202. The wing depicted in FIG. 2 has three disc gangs 202, and each disc gang 202 mounts either 6 or 7 disc blades 112. However, one skilled in the art will understand that fewer or more disc blades 112 may be mounted on each disc gang 202 and each wing 116, 118, 120, 122 may have fewer or more disc gangs 202 than shown in FIG. 2. The disc gangs 202 of a wing 116, 118, 120, 122 are coaxially aligned to create a line of substantially equally spaced disc blades 112.

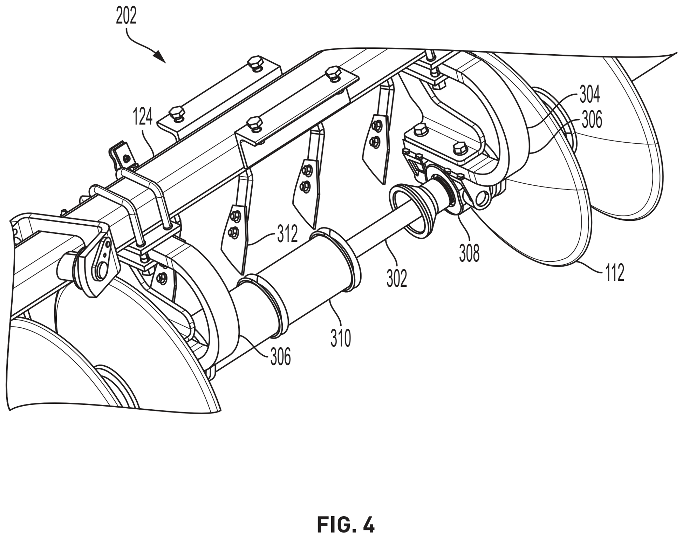

As better seen in FIG. 3 and FIG. 4, each disc gang 202 includes a rotating disc gang shaft 302, which is supported by the support bar 124 using a shaft mount 304. The shaft 302 acts as an axle upon which the disc blades 112 rotate. It is desirable that the disc blades 112 be resiliently mounted to their respective support bars 124 to prevent the disc blades 112 from being damaged or broken when striking an obstacle, such as a large rock in the field. The shaft mount 304 for the ganged disc blades 112 allows the disc blades 112 freedom to move vertically, laterally, and/or torsionally away from obstacles and hard spots to avoid damage to the disc blades 112. One suitable disc mounting mechanism is shown in U.S. Patent RE38,974, "Agricultural Disc Mounting System and Method," granted February 14, 2006, which uses C-shaped springs 306 to mount the disc gang shaft 302 to the support bar 124. A suitable bearing 308 is mounted to a lower leg of the spring 306 to allow rotation of the gang shaft 302. However, one skilled in the art will understand that other means for mounting the disc gang shaft 302 to the support bar 124 may be contemplated using sound engineering judgment.

Spools 310 in between adjacent disc blades 112 maintain the desired spacing of the disc blades 112 along the shaft 302 (note that some disc blades 112 are omitted from view in FIG. 4 to show the spools 310, and one spool 310 is omitted to show the shaft 302). Disc scrapers 312 may be attached to the support bar 124 to have an edge adjacent each disc blade 112 to keep dirt and residue from sticking to the disc blade 112. One or more bearing caps 314 may cover the bearing 308 and/or ends of the shaft 302 to protect these parts from dirt and residue.

In other embodiments, the disc blades 112 may be individually supported from the support bar 124, rather than arranged in gangs. For example, each disc blade 112 may be supported by its own shaft mount 304.

FIG. 5 is a simplified view of a single disc blade 112, its disc scraper 312, and a bearing cap 314. The bearing cap 314 is configured to seal an interface between the disc blade 112 and its corresponding axle (*i.e*., the shaft 302 about which the disc blade 112 rotates).

FIG. 6 is a simplified drawing illustrating the bearing cap 314 alone. The bearing cap 314 includes a body 602 with a sealing surface 604 configured to abut the shaft 302. The body 602 may include threads, ridges, or other features to secure the bearing cap 314 to the shaft 302. In some embodiments, an O-ring or other sealing material may be disposed in contact with the sealing surface 604 and the shaft 302.

An inertial sensor 606 is located within a space in the body 602 of the bearing cap 314, such that the inertial sensor 606 is sealed between the shaft 302 and the body 602 when the bearing cap 314 is installed. The seal protects the inertial sensor 606 as well as the bearings 308. The inertial sensor 606 may be carried by a printed circuit board 608 carrying other components. For example, the printed circuit board 608 may carry a power source 610 (*e.g*., a battery), an inertial sensor controller 612, and transmitter 614, and/or other components, such as capacitors, memory, *etc*. The inertial sensor 606 may measure the angular motion of the shaft 302 to which it is attached, and may transmit a signal corresponding to the measured motion via the transmitter 614 to the control module 126 (FIG. 1).

The inertial sensor 606 is offset from a rotational axis of the bearing cap 314 such that rotation of the inertial sensor 606 about the axis causes the motion that is measured. The motion detected by the inertial sensor 606 is proportional to the distance from the inertial sensor 606 to the rotational axis.

The transmitter 614 may be wireless transmitter configured send a wireless signal (*e.g*., Bluetooth communications, near-field communications, or other electromagnetic spectrum communications) to the control module 126 for control of the implement 102. The transmitter 614 may be configured to send and receive signals wirelessly, but may alternatively be configured to send only.

The inertial sensor 606, in conjunction with other inertial sensors 606, may alert an operator if one or more of the disc gangs 202 on the implement 102 or any individual disc blades 112 are becoming plugged, thereby preventing the disc blades 112 from rotating as normal.

The control module 126 compares the signal corresponding to the angular motion of each bearing cap 314 to the signals corresponding to the angular motion of the other bearing caps 314 (corresponding to different disc blades 112). If one disc blade 112 starts to become plugged, the plugged disc blade 112 will rotate slower than the other disc blades 112. In some conditions, the plugged disc blade 112 may stop rotating completely while other disc blades 112 continue turning, which may be detected by the inertial sensors 606.

The inertial sensors 606 may be self-powered, such that rotation of the bearing caps 314 causes the inertial sensors 606 to generate electrical power to operate the inertial sensors 606 and send the motion information to the control module 126. If the motion information can be transferred from the transmitter 614 to the control module 126 wirelessly, then the risk of damage to wires during operation of the implement 102 is limited. That is, the physical wires may be contained within the bearing caps 314, and attached to or printed on the printed circuit board 608. Desirably, the inertial sensors 606 may be configured to transmit only during active rotation of the bearing caps 314 and to go into a hibernation mode when not in use.

FIG. 7 illustrates a simplified top view of another agricultural implement 702 that may include a plugging detection system as described above. FIG. 8 illustrates a simplified side view of the implement 702. In use, the implement 702 is drawn in a forward direction 704 by a tractor 706. The tractor 706 has wheels 708, an engine 802, a chassis 710, and other elements as known in the art. The implement 702 has a frame 712 carrying a toolbar 714 supporting row units 716. Each row unit 716 is physically connected to the toolbar 714 by a parallel linkage 804. The row units 716 may include a mini hopper 806 fluidly connected to a central hopper 718 containing seed to be planted and/or fertilizer to be applied. That is, the row units 716 may be planter and/or fertilizer row units of any design, which are generally known in the art. The implement 702 is connected to the tractor 706 by a tow hitch 720. A computer 722, which may include a central processing unit ("CPU"), memory, implement controller, and graphical user interface ("GUI") (*e.g*., a touch-screen interface), is typically located in an operator cabin 724 of the tractor 706. A global positioning system GPS receiver 726 may be mounted to the tractor 706 and connected to communicate with the computer 722. The implement controller is configured to communicate with the row units 716 and/or the GPS receiver 726, such as by wired or wireless communication.

The implement 702 may optionally be supported in the field by wheels 728 coupled to the frame 712. The frame 712 may include a first section 730 (*e.g*., a center section) configured to be towed by the tractor 706, and one or more wing sections 732, 734 hingedly coupled to the first section 730. For example, and as shown in FIG. 7, the first section 730 may be a center section, and two wing sections 732, 734 may be attached to opposite sides thereof. The wing sections 732, 734 may fold for transport or storage, and unfold (as shown in FIG. 7) for planting, fertilizing, or other field operations. Typically, the wheels 728 may support any or all of the wing sections 732, 734. In other embodiments, the center section 730 may be omitted, and two wing sections 732, 734 may be connected directly to one another.

Each of the row units 716 may include one or more disc blades, such as opening discs 808 and closing discs 810, though other disc blades may be present instead of or in addition to these. Row units are described, for example, in U.S. Patent Application Publication 2021/0315147 A1, "Systems Comprising Agricultural Implements Connected to Lifting Hitches and Related Control Systems and Methods," published October 14, 2021; and U.S. Patent Application Publication 2020/00396897 A1, "Fluid Control System," published December 24, 2020.

The disc blades of each row unit are configured to rotate about an axle, and may include a bearing cap 314 having an inertial sensor 606 to detect and transmit the angular motion of each disc blade to a controller, as described above and shown in FIG. 5 and FIG. 6.

The angular motion as measured at disc blades may be compared to the angular motion as measured at other disc blades on other row units 716, which comparison may be used to determine whether a disc blade is plugged. If a plugged disc blade is detected, the operator can take corrective action (*e.g*., stopping the implement 702 and clearing the plugging, raising the plugged row unit 716, raising the entire toolbar 714, *etc*.).

FIG. 9 shows an embodiment of an example control module 126 that may be used to control operations of the plugging detection system that may be used in the implements of FIG. 1 through FIG. 8. In one embodiment, the control module 126 includes a controller 904 (*e.g*., an electronic control unit or ECU) coupled to the plurality of inertial sensors 606 for each of the disc blades, and a user interface 906. The example controller 904 is merely illustrative, and some controllers may have fewer or additional components, and/or some of the functionality associated with the various components depicted in FIG. 9 may be combined, or further distributed among additional modules or controllers. Further, though described in the context of residing in a single controller 904, functionality of the controller 904 may be distributed among a plurality of controllers, and in some embodiments, some of the functionality of the controller 904 may be achieved remote from the implement (*e.g*., if the implement has telecommunications and/or internet connectivity functionality). The controller 904 is depicted in this example as a computer system, but may be embodied as a programmable logic controller (PLC), field programmable gate array (FPGA), application specific integrated circuit (ASIC), among other devices. Certain well-known components of computer systems are omitted here to avoid obfuscating relevant features of the controller 904. In one embodiment, the controller 904 has one or more processors, such as processor 908, input/output (I/O) interfaces 910, and memory 902, all coupled to one or more data busses, such as data bus 912. The memory 902 may include any one or a combination of volatile memory elements (*e.g*., random-access memory RAM, such as DRAM, and SRAM, etc.) and nonvolatile memory elements (*e.g*., ROM, hard drive, tape, CDROM, *etc*.). The memory 902 may store a native operating system, one or more native applications, emulation systems, or emulated applications for any of a variety of operating systems and/or emulated hardware platforms, emulated operating systems, *etc*.

In the embodiment depicted in FIG. 9, the memory 902 includes an operating system 914 and plugging detection software 916. In some embodiments, additional or fewer software modules (*e.g*., combined functionality) may be deployed in the memory 902 or additional memory (or in different devices). In some embodiments, a separate storage device may be coupled to the data bus 912, such as a persistent memory (*e.g*., optical, magnetic, and/or semiconductor memory and associated drives). The storage device may be a removable device, such as a memory stick or disc.

In one embodiment, plugging detection software 916 is executed by the processor 908 to receive user input at the user interfaces 906 (*e.g*., one or a combination of console button, switch, knob, hydro handle or joystick, scroll wheel, display screen with selectable icon displayed on the screen that is manipulated by a mouse or joystick, display screen embodied with selectable icons on a touch-type screen, microphone on a headset or on the console, *etc*.), and match or associate (*e.g*., via look-up table or in some embodiments via programmed switch position activation) the input from the inertial sensors 606.

The user interface 906 may include a display screen coupled to the controller 904 with selectable icons, a hydro handle or joystick with selectable buttons or switches, a console with switches, button, knobs, scroll wheel, a microphone, etc., with corresponding signals from operator input received at the user interfaces 906 delivered via the I/O interfaces 910 to the plugging detection software 916 executing on the processor 908. The output from the plugging detection software 916 is provided to the user interface 906, which in turn displays a warning of the plugged condition.

Execution of the plugging detection software 916 may be implemented by the processor 908 under the management and/or control of the operating system 914. For instance, the source statements that embody the method steps or algorithms of the plugging detection software 916 may be translated by one or more compilers of the operating system 914 to assembly language and then further translated to a corresponding machine code that the processor 908 executes to achieve the functionality of the plugging detection software 916. Variations of this execution process are known, depending on the programming language of the software. In some embodiments, the operating system 914 may be omitted and a more rudimentary manner of control implemented. The processor 908 may be embodied as a custom-made or commercially available processor, a central processing unit (CPU) or an auxiliary processor among several processors, a semiconductor based microprocessor (in the form of a microchip), one or more application specific integrated circuits (ASICs), a plurality of suitably configured digital logic gates, and/or other well-known electrical configurations comprising discrete elements both individually and in various combinations to coordinate the overall operation of the controller 904.

The I/O interfaces 910 provide one or more interfaces to one or more devices, such as the user interfaces 906 and the inertial sensor 606, among other devices that are coupled directly or indirectly (*e.g*., over a bus network, such as a CAN network, including one operating according to ISOBUS standards) to the controller 904. The I/O interfaces 910 may also comprise functionality to connect to other networks. For instance, the I/O interfaces 910 may include a network interface that enables remote or wireless communications, such as via telemetry functionality, Bluetooth communications, near-field, among other electromagnetic spectrum communications.

FIG. 10 is a simplified flow chart illustrating a method 1000 of operating an agricultural implement, such as those described above.

In block 1002, the agricultural implement is driven (*e.g*., towed) through an agricultural field. In block 1004, bearing caps comprising inertial sensors measure motions of each of a plurality of ground-engaging elements aligned along the length of a support bar. In block 1006, the angular motion of each of the ground-engaging elements is wirelessly transmitted to a control module, such as by Bluetooth communications, near-field communications, or other electromagnetic spectrum communications). In block 1008, the control module compares signals corresponding to the motions of each of the ground-engaging elements. In block 1010, an alert is displayed if one of the ground-engaging elements has a motion that is different than other of the ground-engaging elements by a preselected threshold amount. The threshold amount may be selected to be an amount indicative of an operational problem of the implement, such as a plugging condition. In some embodiments, the threshold amount may be, for example, 5%, 10%, 15%, 25%, 50%, etc. In block 1012, the agricultural implement is stopped or raised responsive to the alert to promote clearing of a blockage.

Though depicted as a flow chart, the actions in FIG. 10 may be performed concurrently, and in some embodiments, some actions may be omitted.

## Claims

1. An agricultural implement comprising:
a main frame having a support bar oriented in a direction generally transverse to a direction of travel when the implement is used to work a field;
a plurality of rotating ground-engaging elements aligned along a length of the support bar, wherein each of the ground-engaging elements is configured to rotate about an axle; and
a plurality of bearing caps, each bearing cap coupled to one of the ground-engaging elements, wherein each bearing cap comprises:
an inertial sensor configured to measure an angular motion of the ground-engaging element; and
a transmitter configured to transmit a signal corresponding to the angular motion;
wherein each bearing cap is configured to seal an interface between the ground-engaging element and corresponding axle.

2. The agricultural implement of claim 1, wherein the inertial sensor comprises an accelerometer, and wherein the angular motion comprises an angular acceleration.

3. The agricultural implement of claim 1, wherein the inertial sensor comprises a gyroscope, and wherein the angular motion comprises an angular velocity.

4. The agricultural implement of claim 1, wherein the inertial sensor comprises a magnetometer, and wherein the angular motion comprises an angular velocity.

5. The agricultural implement of any one of claims 1 to 4, wherein each transmitter is a wireless transmitter.

6. The agricultural implement of claim 5, wherein each wireless transmitter is configured to communicate via Bluetooth.

7. The agricultural implement of any one of claims 1 to 6, wherein the support bar comprises a toolbar, and further comprising a plurality of row units spaced along the toolbar.

8. The agricultural implement of claim 7, wherein each ground-engaging element is carried by one of the row units.

9. The agricultural implement of claim 7 or 8, wherein each row unit is coupled to the toolbar by a parallel linkage.

10. The agricultural implement of any one of claims 7 to 9, wherein each row unit comprises a planter row unit or a fertilizer row unit.

11. A plugging detection system configured to alert an operator if one or more of the ground-engaging elements of the agricultural implement of any one of claims 1 to 10 have a motion different from a motion of remaining ground-engaging elements by at least a threshold amount, the plugging detection system comprising:
a control module configured to receive signals corresponding to the angular motion from the transmitters and compare signal corresponding to the angular motion of each ground-engaging element to the signal corresponding to an angular motion of the remaining ground-engaging elements.

12. A method for operating an agricultural implement, wherein the agricultural implement has a plurality of rotating ground-engaging elements aligned along a length of a support bar, the method comprising:
driving the agricultural implement through an agricultural field;
measuring an angular motion of each of the ground-engaging elements using a plurality of bearing caps, each bearing cap comprising an inertial sensor;
wirelessly transmitting the angular motion of each of the ground-engaging elements to a control module;
comparing the angular motions of each of the ground-engaging elements using the control module; and
displaying an alert if one of the ground-engaging elements has an angular motion that is different than the angular motion of other of the ground-engaging elements by a preselected threshold amount.

13. The method of claim 12, wherein transmitting the angular motion of each of the ground-engaging elements to the control module comprises transmitting the angular motion wirelessly to the control module.

14. The method of claim 12 or 13, further comprising stopping the driving of the agricultural implement responsive to the alert.

15. The method of any one of claims 12 to 14, further comprising raising the agricultural implement responsive to the alert.
